(19) Europäisches Patentamt

European Patent Office

Office européen des brevets

(11) **EP 1 141 461 B1**

(12) **EUROPEAN PATENT SPECIFICATION**

(45) Date of publication and mention of the grant of the patent:
**18.08.2004 Bulletin 2004/34**

(51) Int Cl.⁷: **D04H 13/00**, B32B 5/26, B29C 43/18, B32B 27/12

(21) Application number: **99950943.3**

(22) Date of filing: **21.10.1999**

(86) International application number:
**PCT/GB1999/003485**

(87) International publication number:
**WO 2000/024955 (04.05.2000 Gazette 2000/18)**

(54) **NONWOVEN FOR POLYMER MOULDING APPLICATIONS**

FASERVLIES FÜR POLYMER-FORMMASSE-ANWENDUNGEN

NON TISSE DESTINE A DES UTILISATION DE MOULAGE POLYMERE

(84) Designated Contracting States:
**AT BE CH CY DE DK ES FI FR GB GR IE IT LI LU MC NL PT SE**
Designated Extension States:
**SI**

(30) Priority: **23.10.1998 EP 98308712**

(43) Date of publication of application:
**10.10.2001 Bulletin 2001/41**

(73) Proprietor: **Ahlstrom Windsor Locks LLC Windsor Locks, CT 06096 (US)**

(72) Inventors:
• **BEVERIDGE, Colin Northumberland TD15 1NX (GB)**
• **LANIER, Gilbert F-94130 Nogent sur Marne (FR)**

(74) Representative: **Mercer, Christopher Paul et al Carpmaels & Ransford 43, Bloomsbury Square London WC1A 2RA (GB)**

(56) References cited:
**EP-A- 0 013 468          EP-A- 0 540 024**
**EP-A- 0 557 678          WO-A-96/41045**
**WO-A-97/04173          WO-A-97/40778**
**GB-A- 2 220 010          US-A- 5 158 575**
**US-A- 5 801 107**

• **DATABASE WPI Section Ch, Week 9032 Derwent Publications Ltd., London, GB; Class A32, AN 90-242866 XP002096838 & JP 02 169248 A (TOYOBO KK), 29 June 1990 (1990-06-29)**

**Description**

*Field of the invention*

The present invention relates to a nonwoven composite, to a process for the production of such a nonwoven composite and to its use as a lining between the body of a moulded article and a decorative facing material borne by the said body.

*Background to the invention*

Moulded forms made from thermoplastic polymers have been used for many years as decorative or infill articles, for instance panels, in automotive vehicles, domestic appliances, and the like. Such panels and like components originally had just the polymeric surface itself as the outer face and may have been textured to give a decorative effect. Recently there has been a trend towards laminating a decorative material to the outer surface of the polymer form to improve the effect. These decorative materials can, for example, be textiles, nonwovens or decorative thermoplastic olefin (TPO) films or skins.

The trend to providing these moulded forms with decorative surfaces has been particularly strong in the automotive industry in order to match the consumer demand for more "luxurious" interiors; as a result, these decorative moulded components are now common features as door linings, door pillars, dashboard elements, and the like. Additionally, a foam layer, typically polypropylene or polyurethane, may be introduced between the decorative layer and the body of the article; this technique is particularly used when the component is required to feel soft to the touch.

In the production of these moulded components there has been a move to applying the decorative surface to the moulded form during the moulding process itself rather than laminating the decorative material to the moulded form as an additional process step after the moulding process; this has cost and productivity advantages. Examples of the moulding techniques used can be found in, for example, F. Beckmann *et al.*, "Fabric back injection: from special process to mass production", *Proceedings of VD1 Plastics in Automotive Engineering Conference,* Manheim (March 1998); I. Adcock, "The pressure is on for a new mold", *Automotive & Transportation Interiors* (May 1997); and United States Patent 5 543 094 (Hara *et al.*). The teaching in these documents is incorporated herein by reference.

A particular problem in the one-step processes is that, because of the temperatures and pressures used, the decorative surface material can be degraded by being compressed (a textile will be flattened and lose its natural nap, for example) or the thermoplastic polymer used for the body of the form can exude into the decorative surface. If a foam layer is included in the article then this too can be degraded in the moulding process.

The *Hara et al*. patent suggests that these effects can be reduced or eliminated by providing a nonwoven lining between the thermoplastic form and the decorative surface, in this case a fabric. However, the use of needled or spunbonded nonwoven linings as exemplified in the Hara *et al*. patent may still not protect the decorative material adequately because of the inherent non-uniformity of nonwoven fabrics produced by these methods. The nature of the surface of these nonwovens can also create uneven flow patterns within the thermoplastic polymer from which the body of the form is moulded; the surface pattern inherent in these nonwovens can be imposed on the decorative layer.

WO-A-96/41045 discloses a fibrous nonwoven composite which is formed from at least two sources of fibres that are entangled one with another by, in particular, hydroentangling. One source of fibres comprises absorbent fibres such as wood-pulp fibres. The other source of fibres, referred to as "matrix fibres", includes hydrophilic fibres and hydrophobic fibres (the latter being optionally treated to render them hydrophilic), suitable matrix fibres including staple fibres or continuous fibres made from extrudable or spinnable polymers such as rayon, polyolefins and polyesters). The composite should include from 20 to 75% by weight of absorbent fibres and from 25 to 80% by weight of the matrix fibres, preferably 50 to 60% of absorbent fibres and 40 to 50% matrix fibres. Example 1 of this document discloses a process in which, as the composite leaves the hydroentangling apparatus, the nonwoven side of the composite is sprayed with a surfactant solution containing deionised water, n-hexanol and an organosiloxane surfactant. The surfactant is sprayed onto the nonwoven side of the composite so as to impart to the overall web a concentration of 1.0% by weight, based upon the total weight of the composite web. There is no disclosure or suggestion of the use of an organosiloxane surfactant at levels of more than 1 %, by weight, relative to the untreated fibrous web. Furthermore, the composite disclosed in WO-A-96/41045 is intended for use as an absorbent in personal care absorbent articles such as diapers, incontinence products and feminine hygiene products; there is no disclosure or suggestion that the composite would be useful in the production of molded articles.

US-A-5 413 811 discloses a method of softening a nonwoven web comprising the steps of: wetting the nonwoven web with an aqueous solution of softening chemicals; necking the saturated nonwoven to a width of between 50% and 95% of its starting its starting, unstretched width; drying the nonwoven at a temperature and for a time sufficient to remove at least 95% of the moisture from the nonwoven web, whereby the web has a final cup crush value that is less than 50% of its starting cup crush value. The fibres in the nonwoven web may be hydroentangled but it is preferred to use thermal bonding. The preferred nonwovens are of meltblown fibres and/or spunbond fibres. Wood pulp fibres may be commingled with the meltblown fibres but there is no disclosure or suggestion of a discrete layer formed of wood pulp or other cellulosic fibres. The webs are intended for such applications as wipes, diapers, feminine hygiene products, medical gowns and surgical drapes; there is no disclosure or suggestion that the webs would be useful as a lining in the production of molded articles.

### Summary of the invention

In a first aspect, the present invention provides a nonwoven composite that is suitable for use as a lining between a facing material and the body of a moulded article, said nonwoven composite comprising a first fibrous layer in the form of a nonwoven web to which a second fibrous layer is joined by fibre entanglement and further comprising a textile-treating agent selected from silicones, derivatives of silicones and quaternary ammonium compounds, wherein the actives level of the treating agent amounts to at least 3% by weight of the solids in the untreated composite, characterised in that the second fibrous layer is formed from a pulp of cellulosic fibres.

In a second aspect, the present invention provides a process for the production of a nonwoven composite that is suitable for use as a lining between a facing material and the body of a moulded article, in which process a second fibrous layer is hydroentangled into a first fibrous layer that is in the form of a nonwoven web, and the resultant structure is treated with a textile-treating agent selected from silicones, derivatives of silicones and quaternary ammonium compounds wherein the actives level in the treating agent amounts to at least 3% by weight of the solids in the untreated composite, characterised in that the second fibrous layer is formed from a pulp of cellulosic fibres.

In a third aspect, the present invention provides an article comprising a moulded body, a decorative facing material and, disposed between them, a nonwoven composite comprising a first fibrous layer in the form of a nonwoven web to which a second fibrous layer is joined by fibre entanglement and further comprising at least one textile-treating agent selected from silicones, derivatives of silicones and quaternary ammonium compounds, wherein the active-ingredient level in the treating agent amounts to at least 3% by weight of the solids in the untreated composite, and the second fibrous layer is formed from a pulp of cellulosic fibres.

In a fourth aspect, the present invention provides a method of manufacturing an article in which a decorative facing material is placed within a mould space, a nonwoven material is located adjacent said material on the side remote from the show surface of the facing material and thermoplastic resin is introduced into the space defined by the mould wall and the surface of the nonwoven material remote from the decorative facing material, wherein the nonwoven material is a composite comprising a first fibrous layer in the form of a nonwoven web to which a second fibrous layer is joined by fibre entanglement and further comprising at least one textile-treating agent selected from silicones, derivatives of silicones and quaternary ammonium compounds, wherein the active-ingredient level in the treating agent amounts to at least 3% by weight of the solids in the untreated composite, and the second fibrous layer is formed from a pulp of cellulosce fibres.

### Description of exemplary embodiments of the invention

According to the invention, a nonwoven material is used as a lining between (i) a decorative surface or facing material (e.g. a fabric or film) and, if included, a foam layer, and (ii) the thermoplastic polymeric body of a moulded article. The decorative fabric, film or other facing material and, if included, the foam layer are introduced into the mould before the thermoplastic polymer and are thus laminated to the body of the article during the moulding process.

It has now been found that the inherent non-uniformity of the types of nonwovens used as linings in the prior art can be satisfactorily overcome by a process whereby cellulosic fibres are entangled into a nonwoven and by the nature of the process fill in the nonuniformities.

In certain preferred embodiments of the process a web of cellulosic fibres is hydroentangled into a base or substrate comprising, or consisting essentially of, a nonwoven web which can, for example, be needlepunched, spunbonded or itself hydroentangled (often termed spunlaced). At this stage the nonwoven/cellulosic web composite (which may also be referred to as a complex or laminate) will be stronger than the original nonwoven but will have lower elongation characteristics and will be more anisotropic, that is the ratio of the cross direction (CD) strength to the machine direction (MD) strength will be less. This ratio, with the CD strength expressed as a percentage of the MD strength, is termed grain. The higher the grain the more isotropic the material. The reduction in elongation and increase in anisotropy that result from the hydroentangling process cause a reduction in moulding performance of the nonwoven in that it cannot stretch so much and cannot adapt itself to the complex shapes of the mould.

However, it has now been further discovered that by treating the nonwoven complex with a textile-treating agent, in particular from the group commonly used as hydrophilic finishes or softening agents, such as a silicone from the group commonly used as softening agents, the properties of the original nonwoven can be restored, or largely so, such that after treatment the elongation characteristics and the isotropy increase to levels that give good moulding performance.

The advantages of the treated, especially silicone-treated, nonwoven complex are several:

- The cellulose "second" layer, by "filling in" the structure of the nonwoven base, can give superior protection against polymer penetration and can reduce or eliminate polymer strike-through defects.
- The cellulose "second" layer provides a thermal barrier so that the outer decorative fabric, film or other facing material and, if included, foam layer are less affected by heat from the moulding process.
- The incorporation of cellulose fibres into the nonwoven base can reduce the "memory effect" such that the nonwoven complex shows little or no tendency to shrink or regress to its original dimensions and shape after moulding is complete.
- The cellulose "second" layer can also provide an excellent laminating surface so that very smooth surfaces can be achieved with the decorative layer and the surface pattern of the original nonwoven is not transferred to the decorative layer.
- The silicone or other textile-treating agent, by increasing elongation and allowing fibres to slip against each other, can enhance moulding performance.
- The silicone or other textile-treating agent may act as a lubricant to the thermoplastic polymer flow by reducing surface friction and also polymer shear, as may occur, for instance, at the injection point. This could allow the moulding of larger parts than has been possible with prior art materials.

The first fibrous layer, which may be regarded as the base layer or substrate, is generally formed of fibres of a synthetic polymer (or mixture of synthetic polymers). A suitable nonwoven web can be produced, for example, from a carded web of polyester (e.g. polyethylene terephthalate), polyamide (e.g. poly(hexamethylene adipamide) or polycaproamide, or nylon) or polyolefin (preferably polypropylene) fibres, which can be needlepunched or hydroentangled; or a spunbonded web, e.g. produced from any of the said polymers, can be used. As another alternative, the base layer can be formed from a wet-formed nonwoven, e.g. one made from any of the said polymers. Mixtures of different fibres can, of course, be used. Preferably, the nonwoven web has a basis weight (grammage) of from 20 $g/m^2$ to 150 $g/m^2$.

The second fibrous layer can be wetlaid or airlaid: it can be deposited as a preformed layer onto the first nonwoven layer, although the formation of the second layer *in situ* on the nonwoven layer, e.g. by deposition of the fibres from a slurry, may come into consideration. The second layer is formed from a pulp of cellulosic fibres, such as wood fibres, or vegetable fibres, e.g. abaca, sisal or jute fibres. Woodpulp is preferred. However, the second layer may also comprise synthetic fibres, especially such fibres of good thermal stability, e.g. polyaramid fibres (such as those obtainable under the trade names "Kevlar" and "Nomex"); polyamide fibres, such as poly(hexamethylene adipamide) or polycaproamide (e.g. nylon fibres); or rayon fibres. Mixtures of different fibres can, of course, be used. Preferably, the second layer has a basis weight (grammage) of from 20 $g/m^2$ to 70 $g/m^2$.

The fibre characteristics, such as fibre length and denier, will generally be chosen so as to provide webs with good uniformity. Typically, fibre lengths of 10-150 mm, e.g. 20-130 mm, may be used for the first layer. In the second layer, fibre lengths may typically be up to 25 mm, e.g. 2-5 mm, for cellulosic pulp fibres and typically 3 to 25 mm for synthetic fibres. Fibre deniers are preferably low, typically 0.5-6 denier (0.56-6.67 dtex) in the first layer and typically 0.1-3 denier (0.11-3.33 dtex) in the second layer.

Prior to the juxtaposition of the second fibrous layer the nonwoven web serving as the first fibrous layer may optionally be cross-stretched or tentered by up to 300 per cent of its original width (heated conditions may be required for extensive cross-stretching), more usually by 5 to 150 percent, and especially by 15 to 80 per cent. Depending on the nature of the fibres, the stretched condition may, if required, be stabilised by heat-setting the web at 150-260°C for a period of up to 10 seconds.

The hydroentanglement may be effected by conventional means, e.g. by directing jets of fluid against the upper web or layer (normally the said second layer) superimposed upon the lower web or layer (normally the said first, nonwoven layer). Thus, the hydroentanglement may typically be carried out by passing the juxtaposed layers, supported on a foraminous belt with the second fibrous layer uppermost, and with a line speed of 5-50 m/min under one or more manifolds providing series or banks of orifices that direct jets of fluid against the said second fibrous layer. The jets are usually columnar jets of water, preferably having a velocity of 40 $ms^{-1}$ or higher and preferably produced under a pressure inside the manifold of 100 kPa or higher. The orifices may typically have diameters of from 0.05 to 0.25 mm, at a spacing or pitch of 0.25 to 1.5 mm. A process of this type is described in published United Kingdom patent application GB-A-2 220 010 (Nozaki *et al*., assigned to Uni-Charm Corporation), in published European patent application EP-A-557,678 (Homonoff *et al*., assigned to Dexter Corporation), and in United States Patent US-A-5 009 747 (Viazmensky *et al*., assigned to Dexter Corporation), the teaching in these documents being incorporated herein by reference.

As disclosed in EP-A-557,678, the total energy input provided by the fluid jets or streams may be calculated

by the formula

$$E = 0.125 \, YPG/bS$$

wherein Y = the number of orifices per linear inch of manifold width (1 inch = 25.4 mm), P = the pressure in psig (pounds per square inch gauge) of liquid in the manifold (1 psig = 6.895 kPa gauge), G = the volumetric flow in cubic feet per minute per orifice (1 cubic foot = 28.32 $dm^3$), S = the speed of the web material under the fluid jets or streams in feet per minute (1 foot = 0.3048 m) and b = the basis weight of the fabric produced in ounces per square yard (1 ounce/$yard^2$ = 33.91 $g/m^2$). The total amount of energy, E, expended in treating the web is the sum of the individual energy values for each pass under each manifold, if there is more than one manifold and/or if there is more than one pass. Usually, the total energy input is from 0.07 to 0.4 horsepower-hours per pound (HPhr/lb) (0.414 to 2.367 MJ/kg). Typically, however, the total energy input is less than 0.3 HPhr/lb (1.776 MJ/kg), e.g. is from 0.1 to 0.25 HPhr/lb (0.592 to 1.480 MJ/kg).

Because the elements (webs or layers) of the complex are hydroentangled together other bonding is not required (although additional bonding is not precluded). The basic technology for hydroentanglement could, of course, be readily adapted for other arrangements. For example, it is possible to have fluid jets impinge on both sides of the composite: such an arrangement may be appropriate when the composite comprises a third fibrous layer adjacent the side of the first, base layer that is remote from the said second layer. In such a "sandwich" construction, the third layer may be similar or dissimilar to the second layer, depending on the desired overall properties of the resultant composite.

Either or each of the layers or webs may be single-ply or formed in two or more plies.

The hydroentangled composite, usually after it has been dried, is treated, in accordance with this invention, with a textile-treating agent (which agent may be hydrophilic). Suitable agents may be selected from the class of silicones and silicone derivatives (organosilicones), including siloxane polymers, e.g. poly(dimethylsiloxanes) (PDMS) or poly(monomethylsiloxane); siloxane copolymers (which term includes graft copolymers and block copolymers), e.g. polyether-polysiloxane copolymers (dimethicone copolyols), such as PDMS - (polyalkylene oxide) copolymer wherein the alkylene oxide is ethylene oxide, propylene oxide or a mixture thereof; and organofunctional siloxanes, e.g. aminofunctional siloxanes. Silicones and derivatives thereof useful as textile-treating agents are known (see, for example, J.C. Salamone (ed.), *Polymeric Materials Encyclopedia,* CRC Press (1996), volume 1, page 215 *et seq.* and volume 10, page 7706 *et seq.).* Silicones useful in the treatment of tissues are also disclosed in WO-A-97/04173, page 8, line 18, to page 9, line 15. Such agents are commercially available, for example the agent marketed as OSI Nuwet 300, or Dow Corning 2-8676 (hydroxy-terminated methylaminopropyl siloxane, 20% actives, emulsion), or Dow Corning 108 (aminoethylaminopropyl dimethyl siloxane).

Other suitable textile-treating agents include quaternary ammonium compounds, e.g. tetraalkylammonium halides, imidazoline quaternaries, amidoamine quaternaries and ester-quaternaries. Quaternary ammonium compounds and their use as fabric softeners are known (see, for example, Kirk-Othmer, *Encyclopedia of Chemical Technology,* Fourth Edition, Volume 20, Wiley-Interscience (1996), page 739 *et seq*.). Quaternary ammonium compounds useful in the treatment of tissues are also disclosed in WO-A-97/04173, page 3, line 22, to page 5, line 29. An example is Varisoft 3690 (methyl-1-oleyl amidoethyl-2-oleyl imidazolinium methylsulfate, aqueous composition, 90% actives). Other agents also come into consideration, e.g. nonionic substituted stearamides.

The treatment agent may comprise a mixture or blend of suitable compounds.

Usually, the treatment agent is applied in the form of an aqueous composition, e.g. an aqueous solution or emulsion. The treatment agent can, for example, be applied in-line by "padding" or "size press" techniques. Preferably, the level of active ingredients in the treatment agent applied to the nonwoven composite is from 3 to 7%, more preferably from 3.5 to 6.5% and most preferably from 4 to 5.5, by weight of the solids in the untreated composite. Thus, in certain preferred embodiments the nonwoven composite comprises 3 to 7%, more preferably 3.5 to 6.5% and most preferably 4 to 5.5%, by weight of silicone treating agent, as silicone, relative to the total dry weight of the fibres. Nuwet 300, for example, may be applied at a concentration of, say, 80 ml/litre for 100% wet pick-up. After application of the treating agent the composite is usually dried.

The nonwoven composite of the invention may be used as a lining or protective backing for decorative elements such as textile, film or TPO skins in the low-pressure injection moulding (LPIM) or compression moulding of such articles as automotive components, e.g. interior door panels, dashboard fascia and pillars.

Adhesive lamination or flame lamination may be used to attach the nonwoven liner to the decorative facing material (or to an intermediate foam layer, if used). Preferably, the said second layer (e.g. a cellulosic web) is located adjacent the decorative facing material (or foam layer) in order to provide a smooth surface.

The present invention is illustrated in and by the following Examples. In these Examples, as elsewhere herein, basis weight (grammage) is measured by ISO 536 using a sample size 203 mm (8 inches) square; and tensile strength and elongation at break is measured according to ISO 1924-1.

*Example 1*

A carded nonwoven web of polyester, lightly bonded by needlepunching and having a basis weight of 80 g/m$^2$, was cross-stretched to 125% of its original width in a tenter and heat-set and was then hydroentangled to a single-ply, wetlaid cellulosic tissue having a nominal fibre length of 2 mm and a basis weight of 39 g/m$^2$. This complex was treated with 4.1% silicone, namely OSi Nuwet 300 Hydrophilic Finish, understood to be an amino modified silicone-polyether copolymer.

Hydroentanglement was effected by passing the base nonwoven web with the cellulosic web superimposed upon it under ten successive manifolds having pressures within them increasing from 3 MPa to 6 MPa. Each manifold had a nozzle plate having two rows of staggered orifices, of 0.09 mm diameter with a spacing of 1 mm, which directed columnar jets of water at the upper surface of the cellulosic web. The juxtaposed webs were supported on a woven fabric, travelling at about 40 m/min, under which fabric were disposed on a series of vacuum boxes, each in register with a respective manifold, for extracting the water. After hydroentanglement, the resultant nonwoven composite was dried. The composite was thereafter impregnated with the silicone treating agent in a conventional size press and was dried once more.

The dry tensile strength and the elongation at break were tested in both the machine direction and the cross direction. For comparison, the untreated complex and the needlepunched nonwoven were also tested. The test data were as follows:

| Properties | Needlepunched nonwoven | Hydroentangled needlepunched nonwoven and cellulosic web | Complex treated with silicone |
|---|---|---|---|
| Dry tensile strength, MD, N/m | 3,130 | 6,257 | 3,596 |
| Dry tensile strength, CD, N/m | 2,750 | 4,030 | 3,061 |
| Dry grain, % | 87.9 | 64.4 | 85.1 |
| Elongation at break, MD, % | 59 | 39 | 48.3 |
| Elongation at break, CD, % | 100 | 72 | 90.5 |

It can be seen that the untreated complex is stronger but has lower elongation than the nonwoven alone but that the silicone treatment has essentially restored the original properties of the nonwoven to the complex.

*Example 2*

Using the same materials as in Example 1, except that the carded nonwoven web of polyester, lightly bonded by needlepunching, has a basis weight of 120 g/m$^2$, and using the same silicone addition level, 4.1%, the following results were obtained.

| Properties | Needlepunched nonwoven | Hydroentangled needlepunched nonwoven and cellulosic web | Complex treated with silicone |
|---|---|---|---|
| Dry tensile strength, MD, N/m | 3,628 | 7,970 | 6,998 |
| Dry tensile strength, CD, N/m | 2,459 | 4,911 | 4,036 |
| Dry grain, % | 67.8 | 61.6 | 57.7 |
| Elongation at break, MD, % | 76.6 | 46.1 | 74 |

(continued)

| Properties | Needlepunched nonwoven | Hydroentangled needlepunched nonwoven and cellulosic web | Complex treated with silicone |
|---|---|---|---|
| Elongation at break, CD, % | 126 | 105.9 | 128.4 |

This gives similar results to Example 1 but the reduction in strength after silicone treatment is much less.

### Example 3

Using the same materials as Example 1, except that the carded nonwoven web is of 1.6 dtex, 38 mm polyester, bonded by hydroentanglement, and has a basis weight of 45 g/m$^2$, and using the same silicone addition level, 4.1%, the following results were obtained.

| Properties | Hydroentangled (spunlaced) nonwoven | Hydroentangled spunlaced nonwoven and cellulosic web | Complex treated with silicone |
|---|---|---|---|
| Dry tensile strength, MD, N/m | 2,896 | 4,198 | 2,379 |
| Dry tensile strength, CD, N/m | 523 | 1,158 | 520 |
| Dry grain, % | 18.1 | 27.6 | 21.9 |
| Elongation at break, MD, % | 27.9 | 23 | 30.9 |
| Elongation at break, CD, % | 164.5 | 80.7 | 110.5 |

Similar effects are obtained with the spunlaced nonwoven precursor as with the needlepunched material.

### Example 4

A base web of 28 g/m$^2$ polypropylene spunlaid nonwoven was hydroentangled to a 60 g/m$^2$ wetlaid cellulosic web (3 x 20 g/m$^2$ ply). This complex was treated with 4.1% silicone agent (OSI Nuwet 300). The test data were as follows:

| Properties | Spunlaid nonwoven | Hydroentangled spunlaid nonwoven and cellulosic web | Complex treated with silicone |
|---|---|---|---|
| Dry tensile strength, MD, N/m | 1,619 | 2,438 | 1,797 |
| Dry tensile strength, CD, N/m | 901 | 1,618 | 911 |
| Dry grain, % | 55.7 | 66.4 | 50.7 |
| Elongation at break, MD, % | 86.2 | 43.6 | 59.6 |
| Elongation at break, CD, % | 129.6 | 75.4 | 106.9 |

Again, similar results are obtained. This construction is particularly appropriate when the interposed nonwoven complex should be lightweight.

*Example 5*

This is the same as Example 1 except that a range of silicone additions has been used.

| Properties | Hydroentangled needlepunched nonwoven and cellulosic web complex treated with silicone | | |
|---|---|---|---|
| | Silicone level 4.1% | Silicone level 5% | Silicone level 6% |
| Dry tensile strength, MD, N/m | 3,596 | 4,031 | 3,871 |
| Dry tensile strength, CD, N/m | 3,061 | 2,675 | 2,632 |
| Dry grain, % | 85.1 | 66.4 | 68 |
| Elongation at break, MD, % | 48.3 | 49.4 | 48.7 |
| Elongation at break, CD, % | 90.5 | 96.3 | 95.8 |

With increased silicone addition, the ratio of CD strength to MD strength declines so that the product is less isotropic. When the silicone addition is increased to 6% the elongation decreases.

**Claims**

1. A nonwoven composite that is suitable for use as a lining between a facing material and the body of a moulded article, said nonwoven composite comprising a first fibrous layer in the form of a nonwoven web to which a second fibrous layer is joined by fibre entanglement and further comprising at least one textile-treating agent selected from silicones, derivatives of silicones and quaternary ammonium compounds, wherein the active-ingredient level in the treating agent amounts to at least 3% by weight of the solids in the untreated composite, **characterised in that** the second fibrous layer is formed from a pulp of cellulosic fibres.

2. A nonwoven composite according to claim 1 wherein the nonwoven web comprises fibres of a synthetic polymer or mixture of synthetic polymers or comprises a mixture of such fibres, e.g. polyester, polyolefin or polyamide fibres or a mixture of two or more such fibres.

3. A nonwoven composite according to claim 1 or 2 wherein the nonwoven web is formed by carding and subsequent needling or by hydroentanglement.

4. A nonwoven composite according to claim 1 or 2 wherein the nonwoven web is a spunbonded material.

5. A nonwoven composite according to any of claims 1 to 4 wherein the basis weight of the nonwoven web is from 20 gm$^{-2}$ to 150 gm$^{-2}$.

6. A nonwoven composite according to any of claims 1 to 5 wherein the second fibrous layer also contains synthetic fibres.

7. A nonwoven composite according to any of claims 1 to 6 wherein the cellulosic fibres are wood fibres, vegetable fibres or a mixture thereof.

8. A nonwoven composite according to claim 7 which comprises, as vegetable fibres, abaca, jute, sisal or a mixture thereof.

9. A nonwoven composite according to any of claims 1 to 8 wherein the second fibrous layer is formed by an airlaying or wetlaying process.

10. A nonwoven composite according to any of claims 1 to 9 wherein the basis weight of the second fibrous layer is

from 20 gm$^{-2}$ to 70 gm$^{-2}$.

**11.** A nonwoven composite according to any of claims 1 to 10 wherein the textile-treating agent is a siloxane polymer, a siloxane copolymer, an organofunctional siloxane or a mixture of two or more of these.

**12.** A nonwoven composite according to any of claims 1 to 11 wherein the active-ingredient level in the treating agent amounts to from 3 to 7% by weight of the solids in the untreated composite..

**13.** A nonwoven composite according to any of claims 1 to 11 which comprises 3 to 7% by weight of silicone treating agent, as silicone, relative to the total dry weight of fibres.

**14.** A nonwoven composite according to claim 13 which comprises 3.5 to 6.5%, by weight of silicone treating agent, as silicone, relative to the total dry weight of fibres.

**15.** A nonwoven composite according to claim 14 which comprises 4 to 5.5%, by weight of silicone treating agent, as silicone, relative to the total dry weight of fibres.

**16.** A process for the production of a nonwoven composite that is suitable for use as a lining between a facing material and the body of a moulded article, in which process a second fibrous layer is hydroentangled into a first fibrous layer that is in the form of a nonwoven web, and the resultant structure is treated with at least one textile-treating agent selected from silicones, derivatives of silicones and quaternary ammonium compounds, wherein the active-ingredient level in the treating agent amounts to at least 3% by weight of the solids in the untreated composite, **characterised in that** the second fibrous layer is formed from a pulp of cellulosic fibres.

**17.** A process according to claim 16 for the production of a nonwoven composite according to any of claims 2 to 15.

**18.** An article comprising a moulded body, a decorative facing material and, disposed between them, a nonwoven composite comprising a first fibrous layer in the form of a nonwoven web to which a second fibrous layer is joined by fibre entanglement and further comprising at least one textile-treating agent selected from silicones, derivatives of silicones and quaternary ammonium compounds, wherein the active-ingredient level in the treating agent amounts to at least 3% by weight of the solids in the untreated composite, and the second fibrous layer is formed from a pulp of cellulosic fibres.

**19.** A moulded article, according to claim 18, wherein a foam layer is disposed between the decorative facing material and the nonwoven composite.

**20.** An article according to claim 18 or 19 wherein the nonwoven composite is according to any of claims 2 to 15.

**21.** A method of manufacturing an article in which a decorative facing material is placed within a mould space, a nonwoven material is located adjacent said material on the side remote from the show surface of the facing material and thermoplastic resin is introduced into the space defined by the mould wall and the surface of the nonwoven material remote from the decorative facing material, wherein the nonwoven material is a composite comprising a first fibrous layer in the form of a nonwoven web to which a second fibrous layer is joined by fibre entanglement and further comprising at least one textile-treating agent selected from silicones, derivatives of silicones and quaternary ammonium compounds, wherein the active-ingredient level in the treating agent amounts to at least 3% by weight of the solids in the untreated composite, and the second fibrous layer is formed from a pulp of cellulosic fibres.

**22.** A method according to claim 21, wherein a foam layer is disposed between the decorative facing material and the nonwoven composite.

**23.** A method according to claim 20 or 21 wherein the nonwoven composite is according to any of claims 2 to 15.

**Patentansprüche**

**1.** Vliesstoff-Composit, der geeignet ist zum Gebrauch als Auskleidung zwischen einem Verkleidungsmaterial und dem Körper eines geformten Gegenstands, wobei der Vliesstoff-Composit eine erste faserige Lage in Form eines Vliesstoffgewebes umfasst, zu welcher eine zweite faserige Lage durch Faserverwicklung hinzugefügt ist, und der weiterhin wenigstens ein Textilbehandlungsmittel, gewählt unter Siliconen, Derivaten von Siliconen und quarternären Ammoniumverbindungen umfasst, worin der Gehalt an Aktivinhaltsstoff in dem Behandlungsmittel wenigstens 3 Gew.-% der Feststoffe in dem unbehandelten Composit beträgt, **dadurch gekennzeichnet, dass** die zweite faserige Lage aus einem Brei von Zellulosefasern gebildet ist.

2. Vliesstoff-Composit nach Anspruch 1, worin das Vliesstoffgewebe Fasern aus synthetischem Polymer oder einem Gemisch synthetischer Polymere umfasst oder ein Gemisch solcher Fasern, z.B. Polyester-, Polyolefin- oder Polyamidfasern oder ein Gemisch von zwei oder mehrerer solcher Fasern umfasst.

3. Vliesstoff-Composit nach Anspruch 1 oder 2, worin das Vliesstoffgewebe durch Krempeln und nachfolgendes Nadeln oder Wasserstrahlverfestigung gebildet wird.

4. Vliesstoff-Composit nach Anspruch 1 oder 2, worin das Vliesstoffgewebe ein Spinnvliesmaterial ist.

5. Vliesstoff-Composit nach einem der Ansprüche 1 bis 4, worin das Grundgewicht des Vliesstoffgewebes von 20 $gm^{-2}$ bis 150 $gm^{-2}$ ist.

6. Vliesstoff-Composit nach einem der Ansprüche 1 bis 5, worin die zweite faserige Lage auch synthetische Fasern enthält.

7. Vliesstoff-Composit nach einem der Ansprüche 1 bis 6, worin die Zellulosefasern Holzfasern, Pflanzenfasern oder ein Gemisch davon sind.

8. Vliesstoff-Composit nach Anspruch 7, der als Pflanzenfasern Abaca, Jute, Sisal oder ein Gemisch davon umfasst.

9. Vliesstoff-Composit nach einem der Ansprüche 1 bis 8, worin die zweite faserige Lage durch ein Luftlege- oder Nasslegeverfahren gebildet ist.

10. Vliesstoff-Composit nach einem der Ansprüche 1 bis 9, worin das Grundgewicht der zweiten faserigen Lage von 20 $gm^{-2}$ bis 70 $gm^{-2}$ ist.

11. Vliesstoff-Composit nach einem der Ansprüche 1 bis 10, worin das Textilbehandlungsmittel ein Siloxanpolymer, ein Siloxancopolymer, ein Organofunktionales Siloxan oder ein Gemisch aus zwei oder mehreren von diesen ist.

12. Vliesstoff-Composit nach einem der Ansprüche 1 bis 11, worin der Gehalt an Aktivinhaltsstoff in dem Behandlungsmittel 3 bis 7 Gew.-% der Feststoffe in dem unbehandelten Composit beträgt.

13. Vliesstoff-Composit nach einem der Ansprüche 1 bis 11, der 3 bis 7 Gew.-% Siliconbehandlungsmittel, als Silicon, bezogen auf das gesamte Trockengewicht an Fasern umfasst.

14. Vliesstoff-Composit nach Anspruch 13, der 3,5 bis 6,5 Gew.-% Siliconbehandlungsmittel, als Silicon, bezogen auf das gesamte Trockengewicht an Fasern umfasst.

15. Vliesstoff-Composit nach Anspruch 14, der 4 bis 5,5 Gew.-% Siliconbehandlungsmittel, als Silicon, bezogen auf das gesamte Trockengewicht an Fasern umfasst.

16. Verfahren zur Herstellung eines Vliesstoff-Composits, der geeignet ist zum Gebrauch als Auskleidung zwischen einem Verkleidungsmaterial und dem Körper eines geformten Gegenstands, in welchem Verfahren eine zweite faserige Lage in eine erste faserige Lage wasserstrahlverfestigt wird, die in Form eines Vliesstoffgewebes ist, und die sich ergebende Struktur mit wenigstens einem Textilbehandlungsmittel, gewählt unter Siliconen, Derivaten von Siliconen und quarternären Ammoniumverbindungen behandelt wird, worin der Gehalt an Aktivinhaltsstoff in dem Behandlungsmittel wenigstens 3 Gew.-% der Feststoffe in dem unbehandelten Composit beträgt, **dadurch gekennzeichnet, dass** die zweite faserige Lage aus einem Brei von Zellulosefasern gebildet wird.

17. Verfahren nach Anspruch 16 zur Herstellung eines Vliesstoff-Composits nach einem der Ansprüche 2 bis 15.

18. Gegenstand, der einen geformten Körper, ein dekoratives Verkleidungsmaterial und zwischen ihnen angeordnet einen Vliesstoff-Composit umfasst, der eine erste faserige Lage in Form eines Vliesstoffgewebes umfasst, zu welcher eine zweite faserige Lage durch Faserverwicklung hinzugefügt ist, und der weiterhin wenigstens ein Textilbehandlungsmittel, gewählt unter Siliconen, Derivaten von Siliconen und quarternären Ammoniumverbindungen umfasst, worin der Gehalt an Aktivinhaltsstoff in dem Behandlungsmittel wenigstens 3 Gew.-% der Feststoffe in dem unbehandelten Composit beträgt, und die zweite faserige Lage aus einem Brei von Zellulosefasern gebildet ist.

**19.** Geformter Gegenstand nach Anspruch 18, worin eine Schaumschicht zwischen dem dekorativen Verkleidungsmaterial und dem Vliesstoff-Composit angeordnet ist.

**20.** Gegenstand nach Anspruch 18 oder 19, worin der Vliesstoff-Composit gemäß einem der Ansprüche 2 bis 15 ist.

**21.** Verfahren zur Herstellung eines Gegenstands, in dem ein dekoratives Verkleidungsmaterial in einem geformten Raum angeordnet wird, ein Vliesstoffmaterial anliegend an dieses Material auf der von der Präsentieroberfläche abgewandten Seite des Verkleidungsmaterials angeordnet wird und thermoplastisches Harz in den Raum eingeführt wird, der durch die geformte Wand und die von dem dekorativen Verkleidungsmaterial abgewandte Oberfläche des Viesstoffmaterials definiert ist, worin das Viesstoffmaterial ein Composit ist, der eine erste faserige Lage in Form eines Vliesstoffgewebes umfasst, zu welcher eine zweite faserige Lage durch Faserverwicklung hinzugefügt wird, und der weiterhin wenigstens ein Textilbehandlungsmittel, gewählt unter Siliconen, Derivaten von Siliconen und quarternären Ammoniumverbindungen umfasst, worin der Gehalt an Aktivinhaltsstoff in dem Behandlungsmittel wenigstens 3 Gew.-% der Feststoffe in dem unbehandelten Composit beträgt, und die zweite faserige Lage aus einem Brei von Zellulosefasern gebildet ist.

**22.** Verfahren nach Anspruch 21, worin eine Schaumschicht zwischen dem dekorativen Verkleidungsmaterial und dem Vliesstoff-Composit angeordnet ist.

**23.** Verfahren nach Anspruch 20 oder 21, worin der Vliesstoff-Composit gemäß einem der Ansprüche 2 bis 15 ist.

## Revendications

**1.** Composite non tissé qui convient pour une utilisation comme revêtement entre un matériau de surfaçage et le corps d'un article moulé, ledit composite non tissé comprenant une première couche fibreuse sous forme d'une bande non tissée à laquelle une deuxième couche fibreuse est reliée au moyen d'un enchevêtrement de fibres, et comprenant en plus au moins un agent de traitement de textile choisi parmi des silicones, des dérivés de silicones et des composés d'ammonium quaternaire, dans lequel le niveau de la matière active dans l'agent de traitement s'élève au moins à 3 % en poids de substances solides présentes dans le composite non traité, **caractérisé en ce que** la deuxième couche fibreuse est formée à partir d'une pulpe de fibres cellulosiques.

**2.** Composite non tissé selon la revendication 1, dans lequel la bande non tissée comprend des fibres d'un polymère synthétique ou un mélange de polymères synthétiques ou comprend un mélange de ces fibres, par exemple, des fibres en polyester, en polyoléfine ou en polyamide ou un mélange d'au moins deux de ces fibres.

**3.** Composite non tissé selon la revendication 1 ou 2, dans lequel la bande non tissée est formée par cardage et par aiguilletage consécutif ou par hydroenchevêtrement.

**4.** Composite non tissé selon la revendication 1 ou 2, dans lequel la bande non tissée est un matériau filé-lié.

**5.** Composite non tissé selon l'une quelconque des revendications 1 à 4, dans lequel le poids de base de la bande non tissée s'élève de 20 gm$^{-2}$ à 150 gm$^{-2}$.

**6.** Composite non tissé selon l'une quelconque des revendications 1 à 5, dans lequel la deuxième couche fibreuse contient également des fibres synthétiques.

**7.** Composite non tissé selon l'une quelconque des revendications 1 à 6, dans lequel les fibres cellulosiques sont des fibres de bois, des fibres végétales ou un mélange de celles-ci.

**8.** Composite non tissé selon la revendication 7, qui comprend comme fibres végétales des fibres d'abaca, de jute, de sisal ou un mélange de celles-ci.

9. Composite non tissé selon l'une quelconque des revendications 1 à 8, dans lequel la deuxième couche fibreuse est formée par un procédé pneumatique ou par un procédé par voie humide.

10. Composite non tissé selon l'une quelconque des revendications 1 à 9, dans lequel le poids de base de la seconde couche fibreuse s'élève de 20 gm$^{-2}$ à 70 gm$^{-2}$.

11. Composite non tissé selon l'une quelconque des revendications 1 à 10, dans lequel l'agent de traitement de textile est un polymère de siloxane, un copolymère de siloxane, un siloxane organofonctionnel ou un mélange d'au moins deux de ceux-ci.

12. Composite non tissé selon l'une quelconque des revendications 1 à 11, dans lequel le niveau de la matière active dans l'agent de traitement représente de 3 à 7 % en poids de substances solides dans le composite non traité.

13. Composite non tissé selon l'une quelconque des revendications 1 à 11, qui comprend 3 à 7 % en poids d'agent de traitement de silicone, en tant que silicone, basé sur le poids sec total des fibres.

14. Composite non tissé selon la revendication 13, qui comprend 3,5 à 6,5 % en poids d'agent de traitement de silicone en tant que silicone, basé sur le poids sec total des fibres.

15. Composite non tissé selon la revendication 14, qui comprend 4 à 5,5 % en poids d'agent de traitement de silicone, en tant que silicone, basé sur le poids sec total des fibres.

16. Procédé pour la production d'un composite non tissé qui convient pour une utilisation comme revêtement entre un matériau de surfaçage et le corps d'un article moulé, dans lequel procédé une deuxième couche fibreuse est hydroenchevêtrée dans une première couche fibreuse qui prend la forme d'une bande non tissée, et la structure obtenue est traitée avec au moins un agent de traitement de textile choisi parmi des silicones, des dérivés de silicones et des composés d'ammonium quaternaire, dans lequel le niveau de la matière active dans l'agent de traitement s'élève au moins à 3 % en poids de substances solides présentes dans le composite non traité, **caractérisé en ce que** la deuxième couche fibreuse est formée à partir d'une pulpe de fibres cellulosiques.

17. Procédé selon la revendication 16 pour la production d'un composite non tissé selon l'une quelconque des revendications 2 à 15.

18. Article comprenant un corps moulé, un matériau de surfaçage décoratif et, disposé entre eux, un composite non tissé comprenant une première couche fibreuse sous forme de bande non tissée à laquelle une deuxième couche fibreuse est reliée par un enchevêtrement de fibres et comprenant en plus au moins un agent de traitement de textile choisi parmi des silicones, des dérivés de silicones et des composés d'ammonium quaternaire, dans lequel le niveau de la matière active dans l'agent de traitement s'élève au moins à 3 % en poids de substances solides présentes dans le composite non traité, et la deuxième couche fibreuse est formée à partir d'une pulpe de fibres cellulosiques.

19. Article moulé selon la revendication 18, dans lequel une couche en mousse est disposée entre le matériau de surfaçage décoratif et le composite non tissé.

20. Article selon la revendication 18 ou 19, dans lequel le composite non tissé est réalisé selon l'une quelconque des revendications 2 à 15.

21. Procédé pour la fabrication d'un article, dans lequel le matériau de surfaçage décoratif est placé dans un espace de moulage, un matériau non tissé est localisé de façon adjacente au dit matériau sur la partie éloignée de la surface visible du matériau de surfaçage et la résine thermoplastique est introduite dans l'espace défini par la paroi du moule et la surface du matériau non tissé éloigné du matériau de surfaçage décoratif, dans lequel le matériau non tissé est un composite comprenant une première couche fibreuse sous forme de bande non tissée à laquelle une deuxième couche fibreuse est reliée par un enchevêtrement de fibres et comprenant en plus au moins un agent de traitement de textile choisi parmi des silicones, des dérivés de silicones et des composés d'ammonium quaternaire, dans lequel le niveau de la matière active dans l'agent de traitement s'élève au moins à 3 % en poids de substances solides présentes dans le composite non traité, et la deuxième couche fibreuse est formée à partir d'une pulpe de fibres cellulosiques.

**22.** Procédé selon la revendication 21, dans lequel la couche en mousse est disposée entre le matériau de surfaçage décoratif et le composite non tissé.

**23.** Procédé selon la revendication 20 ou 21, dans lequel le composite non tissé est réalisé selon l'une quelconque des revendications 2 à 15.